# EUROPEAN PATENT SPECIFICATION

(11) **EP 4 084 584 B1**
(45) Date of publication and mention of the grant of the patent: **28.02.2024**
(21) Application number: 21170645.2
(22) Date of filing: 27.04.2021
(51) Int. Cl.: H05B 47/105, F21V 23/04, F21S 8/00

(54) **AUTOMATIC SENSOR CALIBRATION IN A LUMINAIRE**
AUTOMATISCHE KALIBRIERUNG EINES SENSORS IN EINER LEUCHTE
ÉTALONNAGE DE CAPTEUR AUTOMATIQUE DANS UN LUMINAIRE

(43) Date of publication of application: 02.11.2022
(73) Proprietor: Helvar Oy Ab, 02150 Espoo (FI)
(72) Inventor: JUSLÉN, Henri, 02150 Espoo (FI); MÄKELÄ, Mikko, 02150 Espoo (FI); HELLMAN, Jouko, 02150 Espoo (FI); KOSENKO, Evgenii, 02140 Espoo (FI); NASIR, Omar, 02150 Espoo (FI)
(74) Representative: Berggren Oy

(56) References cited:
- EP-A1- 3 860 313
- US-A1- 2014 217 887
- US-A1- 2017 042 001

## Description

### TECHNICAL FIELD

The example and non-limiting embodiments of the present invention relate to automated calibration of a sensor in a luminaire.

### BACKGROUND

Many lighting systems applied for illuminating an indoor or outdoor space involve usage of luminaires that are able to autonomously control at least some aspects of their operation based on environmental characteristics determined via usage of one or more sensors provided therein. Typical but non-limiting examples of sensors applicable for assisting lighting control in a luminaire include an occupancy sensor and a light sensor. The luminaires of the lighting system may be communicatively coupled to each other via a wireless or wired communication network, the luminaires hence serving as nodes of a lighting control network. In such an arrangement, a luminaire is able to share information of its operational status and information on environmental characteristics captured using the sensors provided therein to other luminaires of the lighting system and receive corresponding information from other luminaires of the lighting system via the lighting control network.

In addition to (or instead of) the occupancy sensor and/or the light sensor mentioned above, luminaires include sensors of other kind, such as a temperature sensor, a humidity sensor, a carbon dioxide (CO₂) sensor, a volatile organic compound (VOC) sensor, etc. While at least some of such sensors may be provided in a luminaire for the purpose of facilitating automated lighting control therein, on the other hand the luminaire may also include one or more sensors that serve to measure respective environmental characteristics at the location of the luminaire but that do not directly contribute to the automated lighting control therein. In many scenarios inclusion of a sensor in the luminaire is nevertheless advantageous since the luminaire serves as a convenient installation platform for the sensor without the need for installing a dedicated sensor apparatus in a location near the luminaire while the lighting control network readily enables conveying of sensor data originating from the sensor to external entities or systems coupled to the lighting control network. However, the operation of a luminaire may have an effect on the sensor data originating from a sensor provided therein or in close proximity thereof, which may need to be accounted for in order to ensure accuracy and reliability of sensor data originating from such a sensor.

In related art, US 2017/042001 A1 discloses an ambient light sensor that measures an ambient light level at one point in an illuminated environment, such as a warehouse, office, shop, cold-storage facility, or industrial facility, and provides an indication of the measured ambient light level to a processor. The processor maps the measured ambient light level to an estimated ambient light level at a different point in the illuminated environment from the measured ambient light level (e.g., a "task height" about three feet from a warehouse floor). The processor may determine the difference between the estimated ambient light level and a desired light level at the task height and may change the artificial illumination provided by a light fixture to make the actual ambient light level at task height match the desired light level at the task height.

Further in related art, EP 3860313 A1 discloses a luminaire comprising lighting means, a control circuitry and an integrated temperature sensor functionally connected to the control circuitry, wherein the control circuitry is configured to compensate a temperature signal from the temperature sensor by a compensation value ΔT in order to obtain an estimate for an ambient temperature of the luminaire, wherein the control circuitry is configured to use at least one operating parameter of the lighting means of the luminaire to obtain the compensation value ΔT.

Further in related art, US 2014/217887 A1 discloses controllers for driver circuits of solid state light bulb assemblies including light emitting diodes that comprise a power converter, a data storage unit operable to store data items relating to an operating behavior of the light bulb assembly, a temperature sensor operable to determine a chip temperature of the controller, and a data processing unit operable to receive the chip temperature, to retrieve the stored data items from the data storage unit, to generate a control signal in dependence upon the chip temperature and the retrieved data items, and to output the control signal to the power converter for operation of the light source.

### SUMMARY

It is an object of the present invention to provide an approach that enables provision of accurate and reliable sensor data from a sensor installed in a luminaire.

According to an example embodiment, a luminaire for illuminating a space is provided, the luminaire comprising: at least one light source for providing light output for said space; a sensor for measuring an environmental characteristic at a location of the luminaire; a control portion for controlling one or more aspects of the light output of the at least one light source in accordance with a predefined lighting control logic, the control portion further arranged to: collect, during a learning period, learning data that is descriptive of a relationship between sensor values measured by said sensor and corresponding operational states of the luminaire, and derive, after the learning period based on said learning data, a calibration model for compensating for an offset occurring in the sensor values measured by said sensor due to the operational state of the luminaire, wherein said sensor is a temperature sensor for measuring an ambient temperature at the location of the luminaire, wherein deriving said calibration model comprises deriving at least one temperature offset curve that models a change in temperature measured by said sensor as a function of the operational state of the luminaire, and wherein said offset defines a deviation from the ambient temperature at the location of the luminaire due to heat originating from operation of the at least one light source.

According to another example embodiment, a method for operating a luminaire is provided, wherein the luminaire comprises at least one light source for providing light output for said space and a sensor for measuring an environmental characteristic at a location of the luminaire, the method comprising: collecting, during a learning period, learning data that is descriptive of a relationship between sensor values measured by said sensor and corresponding operational states of the luminaire, and deriving, after the learning period based on said learning data, a calibration model for compensating for an offset occurring in the sensor values measured by said sensor due to the operational state of the luminaire, wherein said sensor is a temperature sensor for measuring an ambient temperature at the location of the luminaire, wherein deriving said calibration model comprises deriving at least one temperature offset curve that models a change in temperature measured by said sensor as a function of the operational state of the luminaire, and wherein said offset defines a deviation from the ambient temperature at the location of the luminaire due to heat originating from operation of the at least one light source.

According to another example embodiment, a computer program is provided, the computer program comprising computer readable program code configured to cause performing at least a method according to an example embodiment described in the foregoing when said program code is executed on a computing apparatus.

The computer program according to the above-described example embodiment may be embodied on a volatile or a non-volatile computer-readable record medium, for example as a computer program product comprising at least one computer readable non-transitory medium having the program code stored thereon, which, when executed by one or more computing apparatuses, causes the computing apparatuses at least to perform the method according to the example embodiment described in the foregoing.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features. The features described in the following examples may be used in combinations other than those explicitly described, unless explicitly stated otherwise.

Some features of the invention are set forth in the appended claims. Aspects of the invention, however, both as to its construction and its method of operation, together with additional objects and advantages thereof, will be best understood from the following description of some example embodiments when read in connection with the accompanying drawings.

### BRIEF DESCRIPTION OF FIGURES

The embodiments of the invention are illustrated by way of example, and not by way of limitation, in the figures of the accompanying drawings, where
Figure 1 illustrates a block diagram of some logical components of a lighting system according to an example;
Figure 2 illustrates a block diagram of some components of a luminaire according to an example;
Figure 3 illustrates a method according to an example; and
Figure 4 illustrates a block diagram of some components of an apparatus according to an example.

### DESCRIPTION OF SOME EMBODIMENTS

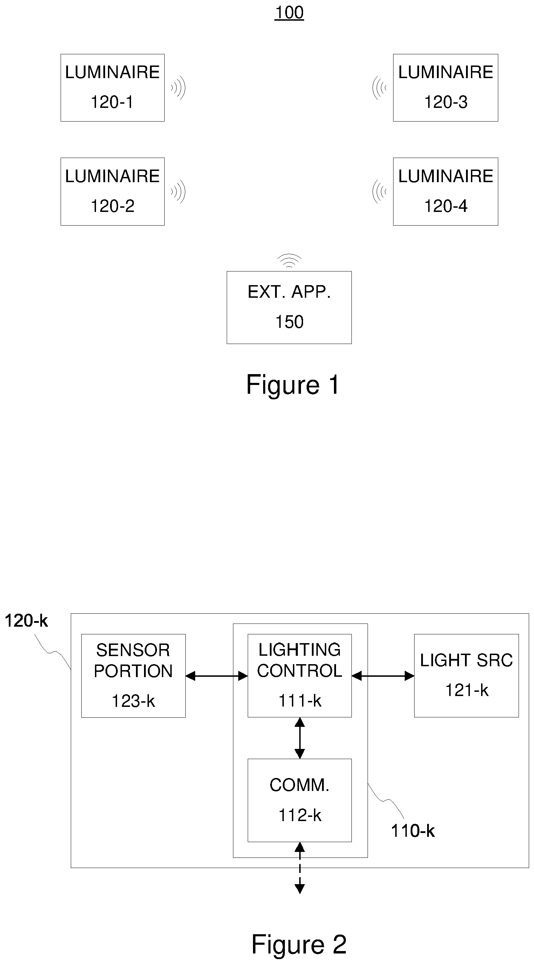

Figure 1 illustrates a block diagram of some components of a lighting system 100 according to an example. The lighting system 100 may be arranged for illuminating one or more spaces, e.g. one or more indoor spaces and/or one or more outdoor spaces. The lighting system 100 as illustrated in Figure 1 includes luminaires 120-1, 120-2, 120-3 and 120-4 and an external apparatus 150. The luminaires 120-1 to 120-4 represent a plurality of luminaires 120, where an individual luminaire may be referred to via a reference number 120-k. Each luminaire 120-k may be arranged at a respective location within the one or more spaces for illuminating the respective location of the one or more spaces.

The luminaires 120-k and the external apparatus 150 may be communicatively coupled to each other via a first network, which may be also referred to as a lighting control network. Hence, each of the luminaires 120-k and the external apparatus 150 may be considered as respective nodes of the lighting control network. In an example, the external apparatus 150 may comprise a server apparatus arranged for controlling one or more aspects of the lighting system 100 and/or for processing data received from the luminaires 120-k of the lighting system 100. In another example, additionally or alternatively, the external apparatus 150 may comprise a gateway to an external network or service that may be available in the one or more spaces the lighting system 100 serves to illuminate, such as a HVAC system, a surveillance system, an alarm system, an elevator system, etc. While the illustration of Figure 1 suggests wireless communication between the luminaires 120-k and the external apparatus 150, the lighting control network may comprise a wireless communication network, a wired communication network or bus, or a combination of a wireless communication network and a wired communication network or bus.

Figure 2 illustrates a block diagram of some components of the luminaire 120-k according to an example. The luminaire 120-k comprises at least one light source 121-k and a control apparatus 110-k that comprises a control portion 111-k for controlling at least one aspect of operation of the luminaire 120-k and a communication portion 112-k for wireless and/or wired communication with other apparatuses. The luminaire 120-k further comprises a sensor portion 123-k that includes one or more sensors for measuring respective environmental characteristics at the location of the luminaire 120-k, e.g. in the location of the one or more spaces the luminaire 120-k serves to illuminate.

The luminaire 120-k or an element thereof may have a luminaire identifier (ID) or a device ID assigned thereto, e.g. an address, a serial number, a name, etc. assigned to the luminaire 120-k or to an element thereof. The luminaire ID may be stored, for example, in a memory provided in the control apparatus 110-k or in another component of the luminaire 120-k. The luminaire ID assigned to the luminaire 120-k may be applied in communication with other nodes of the lighting control network, as described in the following.

According to an example, the at least one light source 121-k comprises one or more light emitting diodes (LEDs) and the lighting control apparatus 110-k comprises or is provided as a LED driver device, whereas in another non-limiting example the at least one light source 121-k comprises one or more fluorescent lamps and the lighting control apparatus 110-k comprises or is provided as an electronic ballast.

The one or more sensors of the sensor portion 123-k may be communicatively couped (e.g. via respective electrical wires) to the lighting control apparatus 110-k to provide respective sensor signals thereto. The sensors of the sensor portion 123-k may be considered as local sensors (at the luminaire 120-k) and the respective sensor signals originating therefrom may be referred to as respective local sensor signals. The one or more sensors of the sensor portion 123-k comprise a temperature sensor for measuring ambient temperature at the location of the luminaire 120-k and additionally may comprise, for example, one or more of the following:
- an occupancy sensor for monitoring occupancy at the location of the luminaire 120-k, e.g. a passive infrared (PIR) sensor, a microwave radar, a lidar, etc.;
- a light sensor for measuring ambient light level at the location of the luminaire 120-k, e.g. photodetector such as photodiode;
- a humidity sensor for measuring air humidity at the location of the luminaire 120-k;
- a carbon dioxide (CO₂) sensor for measuring a CO₂ level at the location of the luminaire 120-k;
- a volatile organic compound (VOC) sensor for measuring respective levels of one or more VOCs at the location of the luminaire 120-k.

Each of the one or more sensors of the sensor portion 123-k may serve to provide respective sensor data that is applied by the control portion 111-k for controlling light output of the at least one light source 121-k and/or to provide respective sensor data that is processed and/or relayed by the control portion 111-k via the lighting control network to the external apparatus 150.

The control portion 111-k may be arranged to control one or more aspects of light output of the at least one light source 121-k in accordance with a predefined lighting control logic that defines one or more lighting control rules.

Each lighting control rule may define a respective pair of a triggering condition and a lighting control action to be carried out in response to an occurrence of the triggering condition. A lighting control rule may optionally have one or more lighting control parameters associated therewith. As an example, a lighting control rule may define a triggering condition that directly or indirectly pertains to one or more sensor signals obtained from the sensor portion 123-k provided locally at the luminaire 120-k, e.g. an occupancy sensor signal and/or a light sensor signal.

In the course of its operation, the control portion 111-k may capture or derive local occupancy state indications (i.e. respective indications of one of occupancy or non-occupancy) based on the occupancy sensor signal received from the occupancy sensor of the sensor portion 123-k and/or derive local light level indications based on the light sensor signal received from the light sensor of the sensor portion 123-k. In the following, lighting control actions arising from application of the lighting control logic are predominantly described as operations carried out by the control portion 111-k (without an explicit reference to the lighting control logic or the lighting control rules defined therein). As a few examples of lighting control actions arising from operation of the lighting control logic, the lighting control logic may define one or more of the following lighting control rules:
- a lighting control rule that defines switching on the light output of the at least one light source 121-k at a target light intensity *I_{tgt,k}* or otherwise adjusting the light output of the at least one light source 121-k from a lower light intensity to the target light intensity *I_{tgt,k}* (i.e. switching on the light output of the luminaire 120-k) as a response to a change of the local occupancy state from non-occupancy to occupancy;
- a lighting control rule that defines adjusting the light output of the at least one light source 121-k to a stand-by light intensity *I_{off,k}* (i.e. switching off the light output of the luminaire 120-k) in accordance with a predefined dimming curve as a response to a change of occupancy state from occupancy to non-occupancy followed by a switch-off delay period *T_{off,k}* without a change of the local occupancy state from non-occupancy to occupancy.

In the above lighting control rules, the dimming curve may define one or more intermediate light intensities between the target light intensity *I_{tgt,k}* and the stand-by light intensity *I_{off,k}* and their respective timings with respect to the duration of the switch-off delay period *T_{off,k}* in order to gradually dim down the light output of the at least one light source 121-k. The stand-by light intensity *I_{off,k}* may be zero (i.e. the light output of the luminaire 120-k completely switched off) or it may be a relatively small non-zero value selected, for example, from a range from a few percent to 20 percent of a reference light intensity of the at least one light source 121-k (e.g. a maximum light intensity thereof). Moreover, to account for cases where the occupancy state remains unchanged, the lighting control logic may comprise respective lighting control rules for keeping the light output of the luminaire 120-k on in response to continued occupancy and/or for keeping the light output of the luminaire 120-k off in response to continued non-occupancy.

As described in the foregoing, the communication portion 112-k may enable wired or wireless communication between the control apparatus 110-k and other apparatuses via the lighting control network. In this regard, the communication portion 112-k may comprise a communication apparatus that enables wireless or wired communication via the lighting control network. A communication apparatus that enables wireless communication may comprise a wireless transceiver that is capable of communicating with wireless transceivers provided in other apparatuses using a wireless communication technique or protocol. The wireless communication may be provided by using a suitable short-range wireless communication technique known in the art that enables communication over ranges from a few meters up to a few hundred meters. Examples of suitable short-range wireless communication techniques include Bluetooth, Bluetooth Low-Energy (BLE), ZigBee, WLAN/Wi-Fi according to an IEEE 802.11 family of standards, etc. As a non-limiting example in this regard, the lighting control network may be provided using a wireless mesh network model, for example on a mesh network according to the Bluetooth or BLE Mesh networking protocol known in the art. A communication apparatus that enables wired communication may comprise a network interface (or a bus interface) that is capable of communicating over a wired network or a wired bus using a predefined communication and/or control protocol, such as the Digital Addressable Lighting Interface (DALI) specified in a series of technical standards IEC 62386. The choice of the wireless or wired communication technique and network topology applied for a specific implementation of the lighting control network and/or the external network may depend e.g. on the required communication range and/or requirements with respect to energy-efficiency of the communication apparatuses.

The control portion 111-k may operate the communication portion 112-k to transmit, via the lighting control network, status indication messages to the other nodes of the lighting control network. A status indication message may comprise a header part including information defined and/or required by the applied communication protocol and a payload part comprising one or more status indications that are descriptive of current (or recent) operating characteristic of the luminaire 120-k and/or the control apparatus 110-k transmitting the status indication message. Conversely, the control apparatus 110-k may receive, via the lighting control network, status indication messages (and hence status indications) from other ones of the plurality of luminaires 120 and from possible other nodes of the lighting control network. A status indication transmitted from the control apparatus 110-k may comprise, for example, one of the following:
- an action indication that identifies a lighting control action taken by the control portion 111-k, e.g. switching on the light output of the luminaire 120-k (e.g. at the target light intensity *I_{tgt,k}*), switching of the light output of the luminaire 120-k (e.g. to the stand-by light intensity *I_{off,k}*), or keeping the light output of the luminaire 120-k unchanged (e.g. at the target light intensity *I_{tgt,k}* or at the stand-by light intensity *I_{off,k}*);
- a sensor indication that comprises the current (or the most recent) sensor indication derived on basis of a sensor signal received from a respective sensor of the sensor portion 123-k in the control portion 111-k, e.g. the current (or the most recent) local occupancy state indication derived on basis of the occupancy sensor signal received from the sensor portion 123-k or the current (or the most recent) local light level indication derived on basis of the light sensor signal received from the sensor portion 123-k.

A status indication message may comprise timing information that indicates the capturing time(s) of the status indication(s) included in the status indication message, e.g. one or more timestamps that indicate the time with respect to a predefined reference time, included in the payload part of the status indication message. A status indication message may further comprise the device ID assigned to the control apparatus 110-k (or to the luminaire 120-k) that has transmitted the status indication message, in other words an identification of the luminaire 120-k to which the status indication(s) conveyed in the status indication message pertain. The device ID may be provided, for example, as part of the header part of the status indication message or it may be included in the payload part of the status indication message.

Referring back to the sensor portion 123-k, respective sensor values provided by at least some of the one or more sensors therein may be susceptible to bias that is dependent on an operational state of the luminaire 120-k. In other words, a sensor value reported by a sensor of the sensor portion 123-k may involve offset, i.e. a deviation from the true value of the respective environmental characteristic, that occurs due to an operational state of the luminaire 120-k and that may vary over time in dependence of changes in the operational state of the luminaire 120-k. The operational state of the luminaire 120-k may comprise one or more aspects of operation of the luminaire 120-k. An example of such aspects of operation of the luminaire 120-k is an operational state of the at least one light source 121-k, where the operational state of the at least one light source 121-k at a given time instant may comprise one of two or more predefined light output states of the at least one light source 121-k, e.g. one of the following:
- a first light output state where the light output from the at least one light source 121-k at the respective time instant is switched on;
- a second light output state where the light output from the at least one light source 121-k at the respective time instant is switched off.

In this regard, a heat arising from operation of the at least one light source 121-k may result in time-varying offset in the sensor value, whereas the amount of heat originating from the at least one light source 121-k at a given time instant may depend on the operational state of the at least one light source 121-k at respective time instant and within a time period preceding the respective time instant.

The heat originating from the at least one light source 121-k may be conveyed to the sensor via the at least one light source 121-k heating the ambient air in its vicinity and/or via the structure of the luminaire 120-k. The amount of heat transferred from the at least one light source 120-k to the sensor and a rate of the heat transfer depend on e.g. the position of the sensor with respect to the at least one light source 121-k in the luminaire 120-k and the amount of heat generated by the at least one light source 121-k, where the latter may depend on e.g. the type of the at least one light source 121-k and the light intensity applied therefor. Moreover, the location of the luminaire 120-k in the one or more spaces (e.g. with respect to walls, windows, doors, etc. of a space) may further have an effect on the amount heat transferred and the rate of the heat transfer. Hence, the heat transfer from the at least one light source to the sensor of the sensor portion 123-k typically depends on several factors that cannot be readily accounted for upon manufacturing and/or installation of the luminaire 120-k.

Typically, the amount of heat transferring from the at least one light source 121-k begins to gradually increase after switching on the light output of the luminaire 120-k from the stand-by light intensity *I_{off,k}* to the target light intensity *I_{tgt,k}* until reaching a level that is characteristic to the target light intensity *I_{tgt,k},* while on the other hand the amount of heat transferring from the least one light source 121-k begins to gradually decrease after switching off the light output of the luminaire 120-k from the target light intensity *I_{tgt,k}* (in accordance with the predefined dimming curve) to the stand-by light intensity *I_{tgt,k}* until reaching a level that is characteristic to the stand-by light intensity *I_{off,k}*. Since the stand-by light intensity *I_{off,k}* is set to a zero light intensity or to another relatively low light intensity (as described in the foregoing), for practical purposes the heat level that is characteristic to the stand-by light intensity *I_{off,k}* may be considered to have a negligible effect on the measurement results of the sensor, while on the other hand the heat level that is characteristic to the target light intensity *I_{off,k}* may have a significant effect on the measurement results of the sensor.

Consequently, the offset in a sensor value obtained from a sensor of the sensor portion 123-k at a given time instant that occurs due to the heat originating from the at least one source 121-k in dependence of its operational state at the respective time instant and within a time period preceding the respective time instant may be expressed via a sensor value offset *Δx*: in a scenario where the at least one light source 121-k has reached the heat level that is characteristic to the stand-by light intensity *I_{off,k}* the sensor value offset *Δx* may be at a stand-by offset *Δx*_{off} (which may be assumed zero), whereas in a scenario where the at least one light source 121-k has reached the heat level that is characteristic to the target light intensity *I_{tgt,k}* the sensor value offset *Δx* may be at a target-level offset *Δx*ₒₙ. Moreover, during a time period that follows switching the light output of the at least one light source 121-k on or off, the sensor value offset *Δx* may be assumed to be at a value between the stand-by offset *Δx*_{off} and the target-level offset *Δx*ₒₙ.

As a non-limiting example, the heat originating from the at least one light source 121-k may have an especially pronounced and significant effect on the sensor signal originating from the temperature sensor provided in the sensor portion 123-k, which may be referred to as a local temperature sensor signal. Therefore, the following examples describe an approach for accounting for the offset occurring in the temperature indicated by the local temperature sensor signal due to the heat transferring from the at least one light source 121-k in handling of the local temperature sensor signal in the control portion 111-k, whereas these examples readily generalize to the control portion 111-k handling the respective sensor signals originating from sensors of other type applied for measuring an environmental characteristics at the location of the luminaire 120-k, such as the humidity sensor, the CO₂ sensor, the VOC sensor, etc., as will be described in further examples described after ones that pertain to the local temperature signal.

In consideration of the temperature indicated by the local temperature sensor signal for a given time instant, the sensor value offset *Δx* possibly included therein may be referred to as a temperature offset *ΔT*ₐ, which may vary between a stand-by temperature offset *ΔT*_{a,off} (that corresponds to the heat level that is characteristic to the stand-by light intensity *I_{off,k}*) and a target-level temperature offset *ΔT*_{a,on} (that corresponds to the heat level that is characteristic to the target light intensity *I_{tgt,k}*), depending on the operational state of the at least one light source 121-k at the respective time instant and within a time period preceding the respective time instant. In particular, when switching on the light output of the at least one light source 121-k, the temperature offset *ΔT*ₐ may gradually increase until reaching the target-level temperature offset *ΔT*_{a,on} or until switching off the light output of the at least one light source 121-k (whichever occurs first), whereas when switching off the light output of the at least one light source 121-k, the temperature offset *ΔT*ₐ may gradually decrease until reaching the stand-by temperature offset *ΔT*_{a,on} or until switching on the light output of the at least one light source 121-k (whichever occurs first).

While for practical purposes the stand-by temperature offset *ΔT*_{a,off} may be considered to be zero (for the reasons discussed in the foregoing), the target-level temperature offset *ΔT*_{a,off}, the time it takes for the temperature offset *ΔT*ₐ to increase from the stand-by temperature offset *ΔT*_{a,off} to the target-level temperature offset *ΔT*_{a,on} after switching on the light output of the at least one light source 121-k and the time it takes for the temperature offset *ΔT*ₐ to decrease from the target-level temperature offset *ΔT*_{a,on} to the stand-by temperature offset *ΔT*_{a,off} after switching off the light output of the at least one light source 121-k are generally unknown.

In this regard, the control portion 111-k is arranged to carry out, in the course of operation of the luminaire 120-k, a learning procedure in order to derive a calibration model that is useable for compensating for the temperature offset *ΔT*ₐ in the temperature indicated by the local temperature sensor signal at a given time instant, where the temperature offset *ΔT*ₐ occurs due to the operational state of the at least one light source 121-k (as described in the foregoing). As an example, the control portion 111-k carries out the following operations to implement the learning procedure:
- collect, during the learning period, learning data that is descriptive of a relationship between the temperature measured by the local temperature sensor and a corresponding operational state of the at least one light source 121-k; and
- derive, after the learning period based on the learning data, a calibration model for compensating for the temperature offset *ΔT* occurring in the measured temperature due to the operational state of the at least one light source 121-k.

As described in the foregoing, the operational state of the at least one light source 121-k serves as an example of the operational state of the luminaire 120-k, which in general may comprise one or more aspects of operation of the luminaire 120-k, whereas another example in this regard is described later in this text.

The aspect of collecting the learning data may comprise the control portion 111-k recording a respective temperature measured by the local temperature sensor for a plurality of time instants within the learning period and respective operational states of the at least one light source 121-k for the same plurality of time instants. The collected learning data may be stored in the memory provided in the control apparatus 110-k and it may be arranged, for example, into a respective time series of measured temperatures and operating statuses. Consequently, the learning data comprises a plurality of pairs of the temperature measured by the local temperature sensor and a (temporally) corresponding operating status of the at least one light source 121-k.

The learning data may cover at least one heating cycle during which the light output of the at least one light source 121-k is continuously kept at the stand-by light intensity *I_{off,k}* for at least a first time period, followed by continuously keeping the light output of the at least one light source 121-k at the target light intensity *I_{tgt,k}* for at least a second time period and/or at least one cooling cycle during which the light output of the at least one light source 121-k is continuously kept at the target light intensity *I_{tgt,k}* for at least second time period, followed by continuously keeping the light output of the at least one light source 121-k at the stand-by light intensity *I_{off,k}* for at least the first time period. As non-limiting examples in this regard, the first time period may have a duration in a range from 15 minutes to two hours, e.g. one hour, and the second time period may have a duration in a range from 10 minutes to one hour, e.g. 30 minutes. While the learning procedure may be carried out based on a single heating cycle and/or cooling cycle, increased number of heating and/or cooling cycles typically result in improved accuracy of the resulting calibration model.

Since the increase in the temperature measured by the local temperature sensor due to the heat originating from the at least one light source 121-k upon switching on the light output thereof and the decrease in the temperature indicated by the local temperature sensor due to the heat originating from the at least one light source 121-k upon switching off the light output thereof is relatively fast in comparison to changes in ambient temperature, the learning data readily reveals the temperature offset component arising from the heat originating from the at least one light source 121-k in the recorded temperatures:
- occurrences of heating curves that involve relatively rapidly increasing temperature following a time instant of switching on the light output of the at least one light source 121-k (i.e. a change in operating status of the at least one light source 121-k) represent respective occurrences of a change in the temperature offset *ΔT*ₐ from the stand-by temperature offset *ΔT*_{a,off} to the target-level temperature offset *ΔT*_{a,on};
- occurrences of cooling curves that involve relatively rapidly decreasing temperature following a time instant of switching off the light output of the at least one light source 121-k (i.e. a change in operating status of the at least one light source 121-k) represent respective occurrences of a change in the temperature offset *ΔT*ₐ from the target-level temperature offset *ΔT*_{a,on} to the stand-by temperature offset *ΔT*_{a,off}.

In this regard, a heating curve may be considered as a time portion of the learning data starting from a point of switching on the light output and continuing until the temperature indicated by the local temperature sensor signal does not increase anymore or until it increases at a rate that is smaller than a (respective) predefined threshold, thereby reaching a state where the temperature offset *ΔT*ₐ in the temperature indicated by the local temperature sensor signal corresponds to the target-level temperature offset *ΔT*_{a,on}. Along similar lines, a cooling curve may be considered as a time portion of the learning data starting from a point of switching off the light output and continuing until the temperature indicated by the local temperature sensor signal does not decrease anymore or until it decreases at a rate that is smaller than a (respective) predefined threshold, thereby reaching a state where the temperature offset *ΔT*ₐ in the temperature indicated by the local temperature sensor signal corresponds to the stand-by temperature offset *ΔT*_{a,off}.

On the other hand, relatively rapid changes in temperature that do not follow a corresponding change in the operating status of the at least one light source 121-k and/or relatively smooth changes in the temperature do not represent temperature offset but rather represent, respectively, a relatively rapid change in measured temperature arising from a reason other than the change in operating status of the at least one light source 121-k and/or a change in ambient temperature.

In an example, the aspect of deriving the calibration model for compensating for the temperature offset *ΔT*ₐ may comprise the control portion 111-k deriving, based on the learning data, at least one offset curve that models a change in the measured temperature as a function of the operational state of the at least one light source 121-k. As an example in this regard, the at least one offset curve may serve to model a change in the measured temperature as a function of time elapsed since the (most recent) change from one of the two or more predefined light output states of the at least one light source 121-k to another one (e.g. change from the first light output state to the second light output state or vice versa). In a particular example, the at least one offset curve may comprise at least one temperature offset curve, e.g. at least one of the following:
- a first temperature offset curve that models a change in the measured temperature as a function of time elapsed since the (most recent) change from first light output state to the second light output state;
- a second temperature offset curve that models a change in the measured temperature as a function of time elapsed since the (most recent) change from the second light output state to the first light output state.

Consequently, the learning may comprise identifying a plurality of occurrences of the cooling curves in the learning data and deriving the first temperature offset curve based on the identified cooling curves and/or identifying a plurality of occurrences of the heating curves in the learning and deriving the second temperature offset curve based on the identified heating curves. Derivation of the first and/or second offset curve may be carried out, for example, by using a curve fitting technique known in the art, such a regression analysis, to derive the first temperature offset curve based on the identified occurrences of the cooling curves and/or to derive the second temperature offset curve based on the identified occurrences of the heating curves. The first temperature offset curve hence models the change in the temperature offset *ΔT*ₐ from the target-level temperature offset *ΔT*_{a,on} to the stand-by temperature offset *ΔT*_{a,off} and the time it takes for the temperature offset *ΔT*ₐ to increase from the stand-by temperature offset *ΔT*_{a,off} to the target-level temperature offset *ΔT*_{a,on}, whereas the second temperature offset curve models the change in the temperature offset *ΔT*ₐ from the stand-by temperature offset *ΔT*_{a,off} to the target-level temperature offset *ΔT*_{a,on} and the time it takes for the temperature offset *ΔT*ₐ to decrease from the target-level temperature offset *ΔT*_{a,on} to the stand-by temperature offset *ΔT*_{a,off}.

The first temperature offset curve may be provided, for example, as a formula that defines the temperature offset *ΔT*ₐ as a function of time elapsed since the (most recent) change from the first light output state to the second light output sate or as a look-up-table that defines a respective temperature offset *ΔT*ₐ for a plurality of time periods since the (most recent) change from the first light output state to the second light output sate. Along similar lines, the second temperature offset curve may be provided, for example, as a formula that defines the temperature offset *ΔT*ₐ as a function of time elapsed since the (most recent) change from the second light output state to the first light output sate or as a look-up-table that defines a respective temperature offset *ΔT*ₐ for a plurality of time periods since the (most recent) change from the second light output state to the first light output sate.

According to an example, once the calibration model has been derived, i.e. after the learning period, the control portion 111-k may apply the derived calibration model to automatically compensate for the temperature offset *ΔT*ₐ in the temperature indicated by the local temperature sensor signal. In this regard, the control portion 111-k may apply the offset-compensated temperature locally, e.g. as input to the lighting control logic applied therein and/or it may report the offset-compensated temperature to one or more other apparatuses, e.g. to the external apparatus 150, for example in a respective sensor indication. In another example, the control portion 111-k may provide the derived calibration model to one or more other apparatuses, e.g. to the external apparatus 150 for application of the calibration model therein. In the latter example, the control portion 111-k may periodically provide the one or more other apparatuses with information that indicates or that enables deriving the operational state of the at least one light source 121-k, e.g. via action indications and/or sensor indications described in the foregoing.

As an example in this regard, application of the calibration model may comprise:
- determining the operational states of the at least one light source 121-k;
- deriving an offset-compensated temperature via applying the calibration model to the temperature indicated by the local temperature sensor signal in dependence of the operational state of the at least one light source 121-k; and
- applying the offset-compensated temperature as an indication of the (ambient) temperature instead of the temperature indicated by the local temperature sensor signal.

Herein, the aspect of determining the operational states may involve periodically recording the current operational state of the at least one light source 121-k (e.g. as the currently applied one of two or more predefined light output states of the at least one light source 121-k, e.g. one of the first and second light output states described in the foregoing), whereas the aspect of applying the calibration model may comprise applying one of the first temperature offset curve and the second temperature offset curve in accordance with the operational state of the at least one light source 121-k.

As an example in this regard, in case of a recent change from the first light output state to the second light output state of the at least one light source 121 - k, the first temperature offset curve may be applied to derive the offset-compensated temperature based on the temperature indicated by the local temperature sensor signal, whereas in case of a recent change from the second light output state to the first light output state of the at least one light source 121-k, the second temperature offset curve may be applied to derive the offset-compensated temperature based on the temperature indicated by the local temperature sensor signal. After having continuously operated in the first light output state up to a point where (according to the first temperature offset curve) the temperature offset *ΔT*ₐ has reached the target-level temperature offset *ΔT*_{a,on}, the target-level temperature offset *ΔT*_{a,on} may be applied to derive the offset-compensated temperature based on the temperature indicated by the local temperature sensor signal, whereas after having continuously operated in the second light output state up to a point where (according to the second temperature offset curve) the temperature offset *ΔT*ₐ has reached the stand-by temperature offset *ΔT*_{a,off}, the stand-by temperature offset *ΔT*_{a,off} may be applied to derive the offset-compensated temperature based on the temperature indicated by the local temperature sensor signal. In the latter case, if assuming the stand-by temperature offset *ΔT*_{a,off} to be zero (or a negligible non-zero value), the temperature indicated by the local temperature sensor signal may be applied as such, the temperature indicated by the local temperature sensor signal hence directly serving as the offset-compensated temperature.

The examples described above pertain to a calibration model that is appliable for compensating for temperature offset in the temperature indicated by the local temperature sensor signal. However, the heat originating from the at least one light source 121-k may at least indirectly have an effect on respective measurement results of a sensor of other type serving to measure an environmental characteristics at the location of the luminaire 120-k e.g. via having an effect on air humidity and/or airflow in proximity of the luminaire 120-k. In this regard, along the lines discussed in the foregoing, the technique described in the foregoing with references to the calibration model for compensating for the temperature offset in the measured temperature readily generalizes into deriving and applying a respective calibration model that is appliable for compensating for the sensor value offset *Δx* that may occur in a sensor value indicated by the respective sensor signal obtained from any sensor of the sensor portion 123-k that is applied for measuring an environmental characteristics at the location of the luminaire 120-k, such as the humidity sensor, the CO₂ sensor, the VOC sensor, etc.

Further along the lines discussed in the foregoing, in consideration of a sensor value offset in a sensor value indicated by a respective local sensor signal for a given time instant, the sensor value offset *Δx* possibly included therein may vary between a stand-by sensor offset *Δx*_{off} (that corresponds to the heat level that is characteristic to the stand-by light intensity *I_{off,k}*) and a target-level sensor value offset *Δx*ₒₙ (that corresponds to the heat level that is characteristic to the target light intensity *I_{tgt,k}*), depending on the operational state of the at least one light source 121-k at the respective time instant and within a time period preceding the respective time instant. In particular, when switching on the light output of the at least one light source 121-k, the sensor value offset *Δx* may gradually change towards the target-level sensor value offset *Δx*ₒₙ until reaching the target-level sensor value offset *Δx*ₒₙ or until switching off the light output of the at least one light source 121-k (whichever occurs first), whereas when switching off the light output of the at least one light source 121-k, the sensor value offset *Δx* may gradually change towards the stand-by sensor value offset *Δx*_{off} until reaching the stand-by sensor value offset *Δx*ₒₙ or until switching on the light output of the at least one light source 121-k (whichever occurs first).

As in case of the temperature offset *ΔT*ₐ, while for practical purposes the stand-by sensor value offset *Δx*_{off} may be considered to be zero (for the reasons discussed in the foregoing), the target-level sensor value offset *Δx*_{off}, the time it takes for the sensor value offset *Δx* to increase from the stand-by sensor value offset *Δx*_{off} to the target-level sensor value offset *Δx*ₒₙ after switching on the light output of the at least one light source 121-k and the time it takes for the sensor value offset *Δx* to decrease from the target-level sensor value offset *Δx*ₒₙ to the stand-by sensor value offset *Δx*_{off} after switching off the light output of the at least one light source 121-k are generally unknown.

The learning procedure for deriving the calibration model that pertains to respective sensor values indicated by any local sensor signal may be similar to that described in the foregoing for the calibration model that pertains to temperatures indicated by the local temperature sensor signals, *mutatis mutandis.*

Hence, in the generic scenario the learning data collected during the learning period includes data that is descriptive of a relationship between respective sensor values measured by the respective local sensor (of the sensor portion 123-k) and a corresponding operational state of the at least one light source 121-k, whereas the calibration model learned from the learning data is applicable for compensating for the sensor value offset *Δx* occurring in the measured sensor value due to the operational state of the at least one light source 121-k. Moreover, the respective offset components in the recorded sensor values may be found via identification of respective occurrences of heating curves following a time instant of switching the light output of the at least one light source 121-k on and/or cooling curves that involve relatively rapidly changing sensor value following a time instant of switching the light output of the at least one light source 121-k off, which may be applied as basis for deriving at least one offset curve that may comprise at least one sensor value offset curve that models a change in the sensor value measured by the respective local sensor as a function of the operational state of the at least one light source 121-k, e.g. as a function of time elapsed since the (most recent) change from one of the two or more predefined light output states of the at least one light source 121-k to another one (e.g. change from the first light output state to the second light output state or vice versa), e.g.
- a first sensor value offset curve that models a change in the measured sensor value as a function of time elapsed since the (most recent) change from first light output state to the second light output state;
- a second sensor value offset curve that models a change in the measured sensor value as a function of time elapsed since the (most recent) change from the second light output state to the first light output state.

Yet further, the application of the calibration model that pertains to respective sensor values indicated by any local sensor signal may be similar to that described in the foregoing for application of the calibration model that pertains to temperatures indicated by the local temperature sensor signals, *mutatis mutandis.*

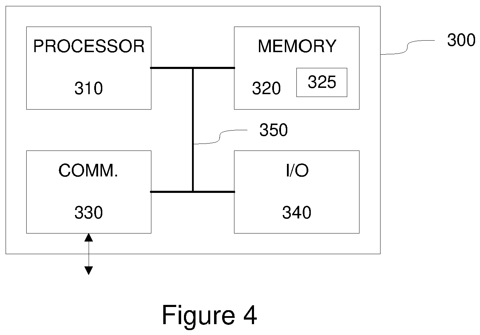

According to an example, the control apparatus 110-k may comprise a processor and a memory, where the memory is arranged to store computer program code that, when executed by the processor, causes the apparatus to perform at least some aspects of operation of the control portion 111-k. A more detailed example in this regard is described in the following with references to Figure 4. Typically, in the course of its operation the processor warms up, whereas the amount of heat arising from operation of the processor is typically proportional to the processing load of the processor, e.g. such that increased processing load results in increased temperature while decreased processing load results in decreased temperature. In this regard, the control apparatus 110-k, e.g. the processor therein, may comprise a temperature sensor for measuring processor temperature. The temperature sensor provided at the control apparatus 110-k may be referred to as an integrated temperature sensor and it may be also applied for measuring the ambient temperature at the location of the luminaire 120-k, provided that a temperature offset *ΔT*ᵢ due to the heat generated by the processor is compensated for.

The processing load of the processor may serve as an indication of an operational state of the processor, which in turn may serve as an aspect of operation of the luminaire 120-k that at least in part represents the operational state of the luminaire 120-k. In this regard, the processing load of the processor may be referred to, in short, as a processor load and it may indicate, for example, an instantaneous processing load of the processor or an average processing load of the processor over an observation window, where the observation window may have a duration, for example, in a range of a few seconds to a few minutes, e.g. one minute. The processor load may be determined, for example, via measuring power consumption of the processor (e.g. via its current consumption) or via estimating the amount of processor activity. In this regard, the control portion 111-k may carry out the learning procedure in order to derive a calibration model that is useable for compensating for the temperature offset *ΔT*ᵢ in the temperature indicated by the integrated temperature sensor signal at a given time instant, where the temperature offset *ΔT*ᵢ occurs due to the operational state of the processor. As an example, the control portion 111-k may carry out the following operations to implement such a learning procedure:
- collect, during the learning period, learning data that is descriptive of a relationship between the temperature measured by the integrated temperature sensor and a corresponding operational state of the processor; and
- derive, after the learning period based on the learning data, a calibration model for compensating for the temperature offset *ΔT*ᵢ occurring in the measured temperature due to the operational state of the processor.

Herein, the aspect of collecting data may comprise the control portion 111-k recording a respective temperature measured by the integrated temperature sensor for a plurality of time instants within the learning period and respective operational states of the processor for the same plurality of time instants. The collected learning data may be stored in the memory provided in the control apparatus 110-k and it may be arranged, for example, into a respective time series of measured temperatures and operating statuses. Hence, the learning data comprises a plurality of pairs of the temperature measured by the integrated temperature sensor and a (temporally) corresponding operating status of the processor. The learning data may comprise respective temperatures measured by the integrated temperature sensor for a plurality of different operational states of the processor that preferably extend from a low processor load (e.g. from an instantaneous or average processor load that is at or close to 0 %) to a high processor load (e.g. to an instantaneous or average processor load that is at or close to 100 %). As an example in this regard, the learning data may involve a respective plurality of time portions of predefined duration where the processor load is arranged to represent a respective predefined processor load, where the predefined processor load may involve a respective constant processor load or a varying processor load that results in a respective average processor load.

Since changes in the processor temperature follow the changes in the operational state of the processor, possibly with a small delay, the learning data readily reveals the temperature offset component arising from heat generated by the processor in the recorded temperatures. In contrast, changes in the processor temperature that appear uncorrelated with changes in the operational state of the processor typically arise from a reason other than the heat originating from the processor, e.g. from changes in ambient temperature and/or from heat originating from another heat source in the luminaire 120-k or in vicinity thereof.

Consequently, according to an example, the aspect of deriving the calibration model for compensating for the temperature offset *ΔT*ᵢ may comprise the control portion 111-k deriving, based on the learning data, a temperature offset function that models a change in the measured processor temperature as a function of the operational state of the processor (e.g. the processor load as described above). As an example in this regard, derivation of the offset function may be carried out by using a curve fitting technique known in the art, such a regression analysis.

Application of the temperature offset function serving as (part of) the calibration model may be carried out as described in the foregoing for application of the calibration model derived for the local temperature sensor signal originating from the sensor portion 123-k, *mutatis mutandis,* e.g. the control portion 111-k may automatically apply the temperature offset function to derive the offset-compensated temperature for local application in the control portion 111-k and/or for reporting to one or more other apparatuses or the control portion 111-k may provide the derived temperature offset function to one or more other apparatuses, e.g. to the external apparatus 150, for application of the temperature offset function therein. In the latter example, the control portion 111-k may periodically provide the one or more other apparatuses with information that indicates the operational state of the processor.

The examples described in the foregoing pertain to calibration models that enable accounting for the temperature offset *ΔT*ᵢ arising due to the heat originating from the processor of the control apparatus 110-k. However, in some examples the temperature measured by the integrated temperature sensor may further involve the temperature offset *ΔT*ᵢ arising due to the heat originating from the processor of the control apparatus 110-k, whereas in such a scenario the calibration model may account for both the temperature offset *ΔT*ᵢ arising due to the heat originating from the processor of the control apparatus 110-k and the temperature offset *ΔT*ᵢ arising due to the heat originating from the processor of the control apparatus 110-k.

As an example in this regard, the calibration model may include respective components for separately accounting for these two temperature offsets *ΔT*ₐ and *ΔT*ᵢ that are possibly included in the temperature indicated by the integrated temperature sensor, e.g. the at least one temperature offset curve and the temperature offset function described in the foregoing. In such an example, the temperature offset function (for compensating for the temperature offset *ΔT*ᵢ) may be derived as described in the foregoing, whereas the at least one temperature offset curve (for compensating for the temperature offset *ΔT*ₐ) may be likewise derived as described in the foregoing with the exception of considering the temperatures indicated by the integrated temperature sensor instead of the temperatures indicated by the local temperature sensor signal (from the sensor portion 123-k).

In another example, the learning procedure for deriving the compensation model that useable for compensating for a combined temperature offset temperature offset *ΔT*_{c} in the temperature indicated by the integrated temperature sensor at a given time instant, where the combined temperature offset *ΔT*_{c} occurs due to respective operational states of the at least one light source 121-k (e.g. the light output state) and the processor (e.g. the processor load as described in the foregoing) at the given time instant. In this regard, the learning data applied for the learning procedure may comprise data that is descriptive of a relationship between the temperature measured by the integrated temperature sensor and corresponding operational states of the at least one light source 121-k and the processor, whereas derivation of the compensation model may comprise deriving at least one temperature offset curve that models a change in the temperature indicated by the integrated temperature sensor as a function of the operational state of the at least one light source 121-k and the operational state of the processor, thereby providing a calibration model for compensating for the combined temperature offset *ΔT*_{c} in the measured temperature. Herein, the at least one temperature offset curve resulting from the learning procedure may include at least one of the following:
- a third temperature offset curve that models a change in the measured temperature as a function of time elapsed since the (most recent) change from first light output state to the second light output state in view of the operational state of the processor;
- a fourth temperature offset curve that models a change in the measured temperature as a function of time elapsed since the (most recent) change from the second light output state to the first light output state in view of the operational state of the processor.

In one example, the learning procedure described in the foregoing may be carried out in the course of normal operation of the luminaire 120-k, whereas in another example the learning procedure may be carried out in a dedicated learning mode during which the normal operation of the control portion 111-k in accordance with the lighting control logic defined therefor may be at least partially disabled or modified. In the latter example, the learning procedure making use of the learning mode may be carried out in factory or laboratory conditions or with the luminaire 120-k installed at its location in the space it serves to illuminate as part of the lighting system 100. In the course of the learning mode, one or more of the lighting control rules of the lighting control logic defined for the control portion 111-k and/or one or more of the lighting control parameters applied by the lighting control logic may be modified to provide additional data concerning the relationship between the sensor value and the corresponding operational state of the luminaires 120-k and thereby facilitate efficient and reliable learning. In this regard, e.g. one or more of the following adjustments of the lighting control logic may be applied:
- the dimming curve applied upon switching off the light output of the luminaire 120-k may be modified such that light intensity is dimmed towards the stand-by light intensity *I_{off,k}* at a rate that is different (e.g. slower) from that applied in normal operation of the luminaire 120-k;
- the target light intensity *I_{tgt,k}* and the stand-by light intensity *I_{off,k}* may be different (e.g. higher) from that applied in normal operation of the luminaire 120-k.

According to an example, the learning procedure may be carried out when a portion of the space illuminated by the luminaire 120-k (or the space illuminated by the lighting system 100 in general) is unoccupied, e.g. during nighttime and/or upon installation of the lighting system 100 (e.g. as part of the construction of or refurbishment applied to the space illuminated by the lighting system 100). Moreover, the environmental conditions at the location of the luminaire 120-k) (or in the space illuminated by the lighting system 100 in general) may be varied during the learning period e.g. via operation of the HVAC system operated therein, the learning procedure thereby accounting for different environmental conditions.

According to an example, the learning procedure carried out by the control portion 111-k may at least partially rely on sensor values received from one or more other ones of the plurality of luminaires 120. As an example in this regard, assuming that another luminaire 120-n that is similar to the luminaire 120-k has been switched off for a longer time such that the at least one light source 121-n therein has reached the heat level that is characteristic to the stand-by light intensity *I_{off,n}* and, consequently, sensor values derived therein may be considered to represent the stand-by offset *Δx*_{off}, the control portion 111-k may apply respective sensor values received from the luminaire 120-n (e.g. in sensor indications originating therefrom) as reference sensor values that represent a baseline value for the respective sensor values in the luminaire 120-k.

In a further example, the control portion 111-k may provide the calibration model derived therein to the luminaire 120-n that is similar to the luminaire 120-k for application therein. Conversely, the control portion 111-k may receive, from the luminaire 120-n, a calibration model derived therein and, consequently, the control portion 111-k may apply the calibration model received from the luminaire 120-n instead of or prior to deriving the calibration model therein. In a variation of this example, the luminaire 120-k may receive the calibration model derived in a similar luminaire operated in another location.

In a further example, the control portion 111-k may subsequently carry out a verification procedure based on the calibration model, which may comprise the calibration model derived by the control portion 111-k or the calibration model received from the luminaire 120-n. In this regard, the control portion 111-k may collect verification data during a verification period and determine whether the collected verification data matches the calibration model. The control portion 111-k may disable possible application of the calibration model therein for the duration of the verification period. In an example, collection of the verification data may involve recording, during the verification period, data that is similar to the learning data described in the foregoing, whereas determination whether the verification data matches the calibration model may involve determining whether the change in the sensor value as a function of the operational state of the luminaire 120-k (e.g. the light output state, the operational state of the processor) derivable from the verification data matches that indicated by the calibration model. As an example in this regard, determination of the match between the verification data and the calibration may comprise deriving a verification model based on the verification data in a manner similar to that described for derivation of the collection data in the foregoing and comparing the verification model to the calibration model.

The control portion 111-k may consider the output of the verification procedure as follows:
- in case the verification data matches the calibration model, e.g. in case the change in the sensor value as a function of the operational state of the luminaire 120-k derivable from the verification data matches that indicated by the calibration model, the verification is successful,
- in case the verification data does not match the calibration model, e.g. in case the change in the sensor value as a function of the operational state of the luminaire 120-k derivable from the verification data does not match that indicated by the calibration model, the verification is unsuccessful.

Hence, successful verification indicates that the calibration model available at the luminaire 120-k is valid in view of the verification data, whereas unsuccessful verification suggests either invalidity of the calibration model available in the luminaire 120-k or malfunction of the luminaire 120-k (e.g. deficient operation of the underlying sensor or unexpected amount of heat transferring to the underlying sensor). The control portion 111-k may respond to unsuccessful verification by issuing an alert in this regard, e.g. via transmitting to one or more other apparatuses (e.g. to the external apparatus 150) an indication in this regard and/or via using a visual indicator in the luminaire 120-k. Additionally or alternatively, the control portion 111-k may respond to unsuccessful verification by disable at least part of operation of the luminaire 120-k under control of the lighting control logic defined therefor.

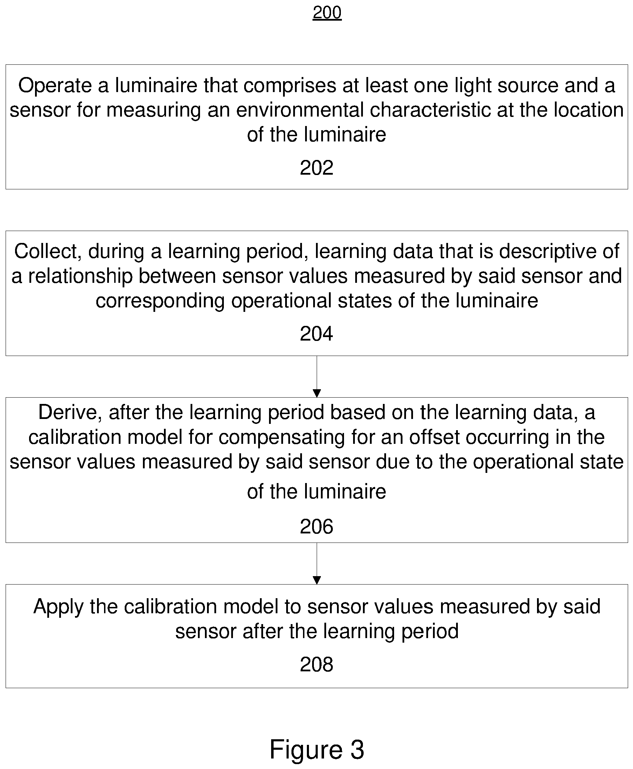

Some of the operations described in the foregoing with references to the lighting control portion 111-k may be also defined as steps of a method. As an example in this regard, Figure 3 depicts a flowchart that illustrates a method 200 that may be carried out e.g. in the lighting control portion 111-k or in another element of the control apparatus 110-k or the luminaire 120-k. The respective operations described with references to blocks 202 to 208 pertaining to the method 200 may be varied or complemented in a number of ways, for example as described in the foregoing and/or in the following with references to the control portion 111-k and/or to other elements of the luminaire 120-k.

The method 200 proceeds from operating the luminaire 120-k that comprises the at least one light source 121-k and a sensor for measuring an environmental characteristic at the location of luminaire 120-k, as indicated in block 202. The method 200 further comprises collecting, during the learning period, learning data that is descriptive of a relationship between sensor values measured by said sensor and corresponding operational states of the luminaire 120-k, as indicated in block 204, and deriving, after the learning period based on the learning data, the calibration model for compensating for the offset occurring in the sensor values measured by said sensor due to the operational state of the luminaire 120-k, as indicated in block 206. The method 200 may further comprise applying the calibration model to sensor values measured by said sensor after the learning period, as indicated in block 208.

Figure 4 illustrates a block diagram of some components of an apparatus 300 that may be employed to implement at least some of the operations described with references to the control apparatus 110-k. The apparatus 300 comprises a processor 310 and a memory 320. The memory 320 may store data and computer program code 325. The apparatus 300 may further comprise communication means 330 for wired or wireless communication with other apparatuses, where the communication means 330 may serve to implement the communication portion 112-k. The apparatus 300 may further comprise user I/O (input/output) components 340 that may be arranged, together with the processor 310 and a portion of the computer program code 325, to provide a user interface for receiving input from a user and/or providing output to the user. In particular, the user I/O components may include user input means, such as one or more keys or buttons, a keyboard, a touchscreen or a touchpad, etc. The user I/O components may include output means, such as a display or a touchscreen. The components of the apparatus 300 are communicatively coupled to each other via a bus 350 that enables transfer of data and control information between the components.

The memory 320 and a portion of the computer program code 325 stored therein may be further arranged, with the processor 310, to cause the apparatus 300 to perform at least some aspects of operation of the control apparatus 110-k. The processor 310 is configured to read from and write to the memory 320. Although the processor 310 is depicted as a respective single component, it may be implemented as respective one or more separate processing components. Similarly, although the memory 320 is depicted as a respective single component, it may be implemented as respective one or more separate components, some or all of which may be integrated/removable and/or may provide permanent / semi-permanent/ dynamic/cached storage.

The computer program code 325 may comprise computer-executable instructions that implement at least some aspects of operation of the control apparatus 110-k when loaded into the processor 310. As an example, the computer program code 325 may include a computer program consisting of one or more sequences of one or more instructions. The processor 310 is able to load and execute the computer program by reading the one or more sequences of one or more instructions included therein from the memory 320. The one or more sequences of one or more instructions may be configured to, when executed by the processor 310, cause the apparatus 300 to perform at least some aspects of operation of the control apparatus 110-k. Hence, the apparatus 300 may comprise at least one processor 310 and at least one memory 320 including the computer program code 325 for one or more programs, the at least one memory 320 and the computer program code 325 configured to, with the at least one processor 310, cause the apparatus 300 to perform at least some aspects of operation of the control apparatus 110-k.

The computer program code 325 may be provided e.g. a computer program product comprising at least one computer-readable non-transitory medium having the computer program code 325 stored thereon, which computer program code 325, when executed by the processor 310 causes the apparatus 300 to perform at least some aspects of operation of the control apparatus 110-k. The computer-readable non-transitory medium may comprise a memory device or a record medium that tangibly embodies the computer program. As another example, the computer program may be provided as a signal configured to reliably transfer the computer program.

Reference(s) to a processor herein should not be understood to encompass only programmable processors, but also dedicated circuits such as field-programmable gate arrays (FPGA), application specific circuits (ASIC), signal processors, etc.

## Claims

1. A luminaire (120-k) for illuminating a space, the luminaire (120-k) comprising:
at least one light source (121-k) for providing light output for said space;
a sensor for measuring an environmental characteristic at a location of the luminaire (120-k);
a control portion (111-k) for controlling one or more aspects of the light output of the at least one light source (121-k) in accordance with a predefined lighting control logic, the control portion (111-k) further arranged to:
collect, during a learning period, learning data that is descriptive of a relationship between sensor values measured by said sensor and corresponding operational states of the luminaire (120-k), and
derive, after the learning period based on said learning data, a calibration model for compensating for an offset occurring in the sensor values measured by said sensor due to the operational state of the luminaire (120-k),
**characterized in that** said sensor is a temperature sensor for measuring an ambient temperature at the location of the luminaire (120-k),
wherein deriving said calibration model comprises deriving at least one temperature offset curve that models a change in temperature measured by said sensor as a function of the operational state of the luminaire (120-k), and
wherein said offset defines a deviation from the ambient temperature at the location of the luminaire (120-k) due to heat originating from operation of the at least one light source (121-k).

2. A luminaire (120-k) according to claim 1, wherein said data comprises respective sensor values measured by said sensor for a plurality of time instants during the learning period, and
respective operational states of the luminaire (120-k) recorded for said plurality of time instants.

3. A luminaire (120-k) according to claim 1 or 2, wherein the operational state of the luminaire (120-k) comprises a light output state of the at least one light source (121-k) and wherein deriving the at least one offset curve comprises at least one of the following:
deriving a first sensor value offset curve that models the change in the sensor value measured by said sensor as a function of time elapsed since changing from a first light output state of the at least one light source (121-k) to a second light output state of the at least one light source (121-k);
deriving a second sensor value offset curve that defines the change in the sensor value measured by said sensor as a function of time elapsed since changing from the light output state of the at least one light source (121-k) to the first light output state of the at least one light source (121-k).

4. A luminaire (120-k) according to claim 3, wherein
the first light output state of the at least one light source (121-k) comprises a light output state where the light output of the at least one light source (121-k) is switched on;
the second light output state of the at least one light source (121-k) comprises a light output state where the light output of the at least one light source (121-k) is switched off.

5. A luminaire (120-k) according to any of claims 1 to 4, wherein the control portion (111-k) comprises a processor and wherein the temperature sensor is further arranged for measuring a temperature of said processor.

6. A luminaire (120-k) according to claim 5, wherein the operational state of the luminaire (120-k) comprises a processing load of said processor and wherein deriving said calibration model comprises deriving a third sensor value offset curve that defines the change in the sensor value measured by said sensor as a function of the processing load of said processor.

7. A luminaire (120-k) according to any of claims 1 to 6, wherein the control portion (111-k) is arranged to adjust at least one aspect of the lighting control logic for the learning period so as to provide additional data concerning the relationship between sensors value measured by said sensor and corresponding operational states of the luminaire (120-k).

8. A luminaire (120-k) according to claim 7, wherein the control portion (111-k) is arranged to adjust the lighting control logic in one or more of the following ways:
adjust a light intensity applied when the light output of the at least one light source (121-k) is switched on to a value that is different from a target light intensity defined in the lighting control logic,
adjust a dimming curve applied when switching off the light output of the at least one light source (121-k) such that dimming towards a stand-by light intensity defied in the lighting control logic is carried out at a rate different from that defined in the lighting control logic.

9. A luminaire (120-k) according to any of claims 1 to 8, wherein the control portion (111-k) is arranged to carry out a verification procedure subsequent to the learning period, the verification procedure comprising the control portion (111-k) arranged to:
collect, during a verification period, verification data that is descriptive of the relationship between sensor values measured by said sensor and corresponding operational states of the luminaire (120-k); and
determine whether the change in the sensor value as a function of the operational state of the luminaire (120-k) derivable from the verification data matches that indicated by the calibration model.

10. A luminaire (120-k) according to any of claims 1 to 9, wherein the control portion (111-k) is arranged to apply the calibration model to sensor values measured by said sensor after the learning period, the application comprising the control portion (111-k) arranged to:
determine operational states of the luminaire (120-k);
derive an offset-compensated sensor value via applying the calibration model to the sensor value measured by said sensor in dependence of the operational state of the luminaire (120-k) upon measuring said sensor value; and
apply the offset-compensated sensor value instead of the sensor value measured by said sensor.

11. A method (200) for operating a luminaire (120-k) for illuminating space, wherein the luminaire (120-k) comprises at least one light source (121-k) for providing light output for said space and a sensor for measuring an environmental characteristic at a location of the luminaire (120-k), the method (200) comprising:
collecting (204), during a learning period, learning data that is descriptive of a relationship between sensor values measured by said sensor and corresponding operational states of the luminaire (120-k), and
deriving (206), after the learning period based on said learning data, a calibration model for compensating for an offset occurring in the sensor values measured by said sensor due to the operational state of the luminaire (120-k)
**characterized in that** said sensor is a temperature sensor for measuring an ambient temperature at the location of the luminaire (120-k),
wherein deriving (206) said calibration model comprises deriving at least one temperature offset curve that models a change in temperature measured by said sensor as a function of the operational state of the luminaire (120-k), and
wherein said offset defines a deviation from the ambient temperature at the location of the luminaire (120-k) due to heat originating from operation of the at least one light source (121-k).

12. A computer program comprising computer readable program code (325) configured to cause a computing apparatus (300) to perform at least the method (200) according to claim 11 when said program code (325) is executed on the computing apparatus (300)

## Patentansprüche

1. Leuchte (120-k) zum Beleuchten eines Raums, wobei die Leuchte (120-k) Folgendes umfasst:
mindestens eine Lichtquelle (121-k) zum Liefern einer Lichtausgabe für den Raum;
einen Sensor zum Messen eines Umweltcharakteristikums an einem Ort der Leuchte (120-k) ;
einen Steuerungsanteil (111-k) zum Steuern eines oder mehrerer Aspekte von der Lichtausgabe der mindestens einen Lichtquelle (121-k) gemäß einer vordefinierten Beleuchtungssteuerungslogik, wobei der Steuerungsanteil (111-k) ferner eingerichtet ist zum:
Sammeln, während einer Lernperiode, von Lerndaten, die eine Beziehung zwischen Sensorwerten, gemessen durch den Sensor, und entsprechenden Betriebszuständen der Leuchte (120-k) beschreiben, und
Ableiten, nach der Lernperiode, auf der Grundlage der Lerndaten, eines Kalibrierungsmodells zum Kompensieren eines Versatzes, der in den Sensorwerten, gemessen durch den Sensor, aufgrund des Betriebszustands der Leuchte (120-k) auftritt,
**dadurch gekennzeichnet, dass** der Sensor ein Temperatursensor zum Messen einer Umgebungstemperatur an dem Ort der Leuchte (120-k) ist,
wobei Ableiten des Kalibrierungsmodells Ableiten mindestens einer Temperaturversatzkurve, die eine Änderung der durch den Sensor gemessenen Temperatur als eine Funktion des Betriebszustands der Leuchte (120-k) modelliert, umfasst und
wobei der Versatz eine Abweichung von der Umgebungstemperatur an dem Ort der Leuchte (120-k) aufgrund von Wärme, die vom Betrieb der mindestens einen Lichtquelle (121-k) ausgeht, definiert.

2. Leuchte (120-k) nach Anspruch 1, wobei die Daten jeweilige Sensorwerte, gemessen durch den Sensor, für eine Vielzahl von Zeitpunkten während der Lernperiode und
jeweilige Betriebszustände der Leuchte (120-k), aufgezeichnet für die Vielzahl von Zeitpunkten, umfassen.

3. Leuchte (120-k) nach Anspruch 1 oder 2, wobei der Betriebszustand der Leuchte (120-k) einen Lichtausgabezustand der mindestens einen Lichtquelle (121-k) umfasst und wobei Ableiten der mindestens einen Versatzkurve mindestens eines der Folgenden umfasst:
Ableiten einer ersten Sensorwertversatzkurve, die die Änderung des Sensorwerts, gemessen durch den Sensor, als eine Funktion von vergangener Zeit seit dem Wechsel aus einem ersten Lichtausgabezustand der mindestens einen Lichtquelle (121-k) in einen zweiten Lichtausgabezustand der mindestens einen Lichtquelle (121-k) modelliert;
Ableiten einer zweiten Sensorwertversatzkurve, die die Änderung des Sensorwerts, gemessen durch den Sensor, als eine Funktion von vergangener Zeit seit dem Wechsel aus dem Lichtausgabezustand der mindestens einen Lichtquelle (121-k) in den ersten Lichtausgabezustand der mindestens einen Lichtquelle (121-k) definiert.

4. Leuchte (120-k) nach Anspruch 3, wobei
der erste Lichtausgabezustand der mindestens einen Lichtquelle (121-k) einen Lichtausgabezustand umfasst, in dem die Lichtausgabe der mindestens einen Lichtquelle (121-k) eingeschaltet ist;
der zweite Lichtausgabezustand der mindestens einen Lichtquelle (121-k) einen Lichtausgabezustand umfasst, in dem die Lichtausgabe der mindestens einen Lichtquelle (121-k) ausgeschaltet ist.

5. Leuchte (120-k) nach einem der Ansprüche 1 bis 4, wobei der Steuerungsanteil (111-k) einen Prozessor umfasst und wobei der Temperatursensor ferner eingerichtet ist zum Messen einer Temperatur des Prozessors.

6. Leuchte (120-k) nach Anspruch 5, wobei der Betriebszustand der Leuchte (120-k) eine Verarbeitungsbelastung des Prozessors umfasst und wobei Ableiten des Kalibrierungsmodells Ableiten mindestens einer dritten Sensorwertversatzkurve, die die Änderung des Sensorwerts, gemessenen durch den Sensor, als eine Funktion der Verarbeitungsbelastung des Prozessors definiert, umfasst.

7. Leuchte (120-k) nach einem der Ansprüche 1 bis 6, wobei der Steuerungsanteil (111-k) eingerichtet ist zum Anpassen mindestens eines Aspekts der Beleuchtungssteuerungslogik für die Lernperiode, um somit zusätzliche Daten, die die Beziehung zwischen Sensorwerten, gemessen durch den Sensor, und entsprechenden Betriebszuständen der Leuchte (120-k) betreffen, zu liefern.

8. Leuchte (120-k) nach Anspruch 7, wobei der Steuerungsanteil (111-k) eingerichtet ist zum Anpassen der Beleuchtungssteuerungslogik auf einem oder mehreren der folgenden Wege:
Anpassen einer Lichtintensität, die angewandt wird, wenn die Lichtausgabe der mindestens einen Lichtquelle (121-k) auf einen Wert geschaltet ist, der sich von einer Ziel-Lichtintensität, definiert in der Beleuchtungssteuerungslogik, unterscheidet,
Anpassen einer Dimmungskurve, die angewandt wird, wenn die Lichtausgabe der mindestens einen Lichtquelle (121-k) ausgeschaltet wird, so dass Dimmen auf eine Bereitschaftslichtintensität, definiert in der Beleuchtungssteuerungslogik, mit einer Rate ausgeführt wird, die sich von der in der Beleuchtungssteuerungslogik definierten unterscheidet.

9. Leuchte (120-k) nach einem der Ansprüche 1 bis 8, wobei der Steuerungsanteil (111-k) eingerichtet ist, auf die Lernperiode nachfolgend, zum Ausführen einer Verifikationsprozedur, wobei die Verifikationsprozedur umfasst, dass der Steuerungsanteil (111-k) eingerichtet ist zum:
Sammeln, während einer Verifikationsperiode, von Verifikationsdaten, die eine Beziehung zwischen Sensorwerten, gemessen durch den Sensor, und entsprechenden Betriebszuständen der Leuchte (120-k) beschreiben; und
Bestimmen, ob die Änderung des Sensorwerts als eine Funktion des Betriebszustands der Leuchte (120-k) aus den Verifikationsdaten ableitbar ist, die mit der übereinstimmt, die durch das Kalibrierungsmodell angegeben wird.

10. Leuchte (120-k) nach einem der Ansprüche 1 bis 9, wobei der Steuerungsanteil (111-k) eingerichtet ist zum Anwenden des Kalibrierungsmodells auf Sensorwerte, die durch den Sensor gemessen wurden, nach der Lernperiode, wobei die Anwendung umfasst, dass der Steuerungsanteil (111-k) eingerichtet ist zum:
Bestimmen von Betriebszuständen der Leuchte (120-k) ;
Ableiten eines versatzkompensierten Sensorwerts über Anwenden des Kalibrierungsmodells auf den Sensorwert, gemessen durch den Sensor, in Abhängigkeit von dem Betriebszustand der Leuchte (120-k) beim Messen des Sensorwerts; und
Anwenden des versatzkompensierten Sensorwerts anstelle des durch den Sensor gemessenen Sensorwerts.

11. Verfahren (200) zum Betreiben einer Leuchte (120-k) zum Beleuchten eines Raums, wobei die Leuchte (120-k) mindestens eine Lichtquelle (121-k) zum Liefern einer Lichtausgabe für den Raum und einen Sensor zum Messen eines Umweltcharakteristikums an einem Ort der Leuchte (120-k) umfasst, wobei das Verfahren (200) Folgendes umfasst:
Sammeln (204), während einer Lernperiode, von Lerndaten, die eine Beziehung zwischen Sensorwerten, gemessen durch den Sensor, und entsprechenden Betriebszuständen der Leuchte (120-k) beschreiben, und
Ableiten (206), nach der Lernperiode auf der Grundlage der Lerndaten, eines Kalibrierungsmodells zum Kompensieren eines Versatzes, der in den Sensorwerten, gemessen durch den Sensor, aufgrund des Betriebszustands der Leuchte (120-k) auftritt,
**dadurch gekennzeichnet, dass** der Sensor ein Temperatursensor zum Messen einer Umgebungstemperatur an dem Ort der Leuchte (120-k) ist,
wobei Ableiten (206) des Kalibrierungsmodells Ableiten mindestens einer Temperaturversatzkurve, die eine Änderung der durch den Sensor gemessenen Temperatur als eine Funktion des Betriebszustands der Leuchte (120-k) modelliert, umfasst und
wobei der Versatz eine Abweichung von der Umgebungstemperatur an dem Ort der Leuchte (120-k) aufgrund von Wärme, die vom Betrieb der mindestens einen Lichtquelle (121-k) ausgeht, definiert.

12. Computerprogramm, umfassend computerlesbaren Programmcode (325), der dazu ausgelegt ist, eine Rechenvorrichtung (300) zum Durchführen mindestens des Verfahrens (200) nach Anspruch 11 zu veranlassen, wenn der Programmcode (325) auf der Rechenvorrichtung (300) ausgeführt wird.

## Revendications

1. Luminaire (120-k) pour éclairer un espace, le luminaire (120-k) comprenant :
au moins une source de lumière (121-k) pour produire une sortie de lumière pour ledit espace ;
un capteur pour mesurer une caractéristique environnementale au niveau d'une localisation du luminaire (120-k) ;
une partie de commande (111-k) pour commander un ou plusieurs aspects de la sortie de lumière de l'au moins une source de lumière (121-k) conformément à une logique de commande d'éclairage prédéfinie, la partie de commande (111-k) étant en outre agencée pour :
collecter, pendant une période d'apprentissage, des données d'apprentissage qui décrivent une relation entre des valeurs de capteur qui sont mesurées par ledit capteur et des états opérationnels correspondants du luminaire (120-k), et pour
dériver, après la période d'apprentissage sur la base desdites données d'apprentissage, un modèle d'étalonnage pour compenser un décalage survenant dans les valeurs de capteur qui sont mesurées par ledit capteur du fait de l'état opérationnel du luminaire (120-k),
**caractérisé en ce que** ledit capteur est un capteur de température pour mesurer une température ambiante au niveau de la localisation du luminaire (120-k),
dans lequel la dérivation dudit modèle d'étalonnage comprend la dérivation d'au moins une courbe de décalage de température qui modélise une variation de la température qui est mesurée par ledit capteur en fonction de l'état opérationnel du luminaire (120-k), et
dans lequel ledit décalage définit une déviation par rapport à la température ambiante au niveau de la localisation du luminaire (120-k) du fait de la chaleur dont l'origine est le fonctionnement de l'au moins une source de lumière (121-k).

2. Luminaire (120-k) selon la revendication 1, dans lequel lesdites données comprennent
des valeurs de capteur respectives qui sont mesurées par ledit capteur pour une pluralité d'instants temporels pendant la période d'apprentissage, et
des états opérationnels respectifs du luminaire (120-k) qui sont enregistrés pour ladite pluralité d'instants temporels.

3. Luminaire (120-k) selon la revendication 1 ou 2, dans lequel l'état opérationnel du luminaire (120-k) comprend un état de sortie de lumière de l'au moins une source de lumière (121-k) et dans lequel la dérivation de l'au moins une courbe de décalage comprend au moins l'une des dérivations suivantes :
la dérivation d'une première courbe de décalage de valeur de capteur qui modélise la variation de la valeur de capteur qui est mesurée par ledit capteur en fonction du temps écoulé depuis le passage depuis un premier état de sortie de lumière de l'au moins une source de lumière (121-k) jusqu'à un second état de sortie de lumière de l'au moins une source de lumière (121-k) ;
la dérivation d'une deuxième courbe de décalage de valeur de capteur qui définit la variation de la valeur de capteur qui est mesurée par ledit capteur en fonction du temps écoulé depuis le passage depuis l'état de sortie de lumière de l'au moins une source de lumière (121-k) jusqu'au premier état de sortie de lumière de l'au moins une source de lumière (121-k).

4. Luminaire (120-k) selon la revendication 3, dans lequel
le premier état de sortie de lumière de l'au moins une source de lumière (121-k) comprend un état de sortie de lumière selon lequel la sortie de lumière de l'au moins une source de lumière (121-k) est commutée dans l'état activé ;
le second état de sortie de lumière de l'au moins une source de lumière (121-k) comprend un état de sortie de lumière selon lequel la sortie de lumière de l'au moins une source de lumière (121-k) est commutée dans l'état désactivé.

5. Luminaire (120-k) selon l'une quelconque des revendications 1 à 4, dans lequel la partie de commande (111-k) comprend un processeur et dans lequel le capteur de température est en outre agencé pour mesurer une température dudit processeur.

6. Luminaire (120-k) selon la revendication 5, dans lequel l'état opérationnel du luminaire (120-k) comprend une charge de traitement dudit processeur et dans lequel la dérivation dudit modèle d'étalonnage comprend la dérivation d'une troisième courbe de décalage de valeur de capteur qui définit la variation de la valeur de capteur qui est mesurée par ledit capteur en fonction de la charge de traitement dudit processeur.

7. Luminaire (120-k) selon l'une quelconque des revendications 1 à 6, dans lequel la partie de commande (111-k) est agencée pour régler au moins un aspect de la logique de commande d'éclairage pour la période d'apprentissage de manière à fournir des données additionnelles concernant la relation entre la valeur de capteur qui est mesurée par ledit capteur et des états opérationnels correspondants du luminaire (120-k).

8. Luminaire (120-k) selon la revendication 7, dans lequel la partie de commande (111-k) est agencée pour régler la logique de commande d'éclairage selon une ou plusieurs des façons suivantes :
le réglage d'une intensité lumineuse appliquée lorsque la sortie de lumière de l'au moins une source de lumière (121-k) est commutée dans l'état activé à une valeur qui est différente d'une intensité lumineuse cible qui est définie dans la logique de commande d'éclairage,
le réglage d'une courbe de gradation qui est appliquée lors de la commutation dans l'état désactivé de la sortie de lumière de l'au moins une source de lumière (121-k) de telle sorte qu'une gradation en direction d'une intensité lumineuse de veille définie dans la logique de commande d'éclairage soit mise en œuvre selon un cadencement différent de celui défini dans la logique de commande d'éclairage.

9. Luminaire (120-k) selon l'une quelconque des revendications 1 à 8, dans lequel la partie de commande (111-k) est agencée pour mettre en œuvre une procédure de vérification subséquente par rapport à la période d'apprentissage, la procédure de vérification comprenant le fait que la partie de commande (111-k) est agencée pour :
collecter, pendant une période de vérification, des données de vérification qui décrivent la relation entre des valeurs de capteur qui sont mesurées par ledit capteur et des états opérationnels correspondants du luminaire (120-k) ; et pour
déterminer si la variation de la valeur de capteur en fonction de l'état opérationnel du luminaire (120-k) pouvant être dérivée à partir des données de vérification correspond à celle indiquée par le modèle d'étalonnage.

10. Luminaire (120-k) selon l'une quelconque des revendications 1 à 9, dans lequel la partie de commande (111-k) est agencée pour appliquer le modèle d'étalonnage sur des valeurs de capteur qui sont mesurées par ledit capteur après la période d'apprentissage, l'application comprenant le fait que la partie de commande (111-k) est agencée pour :
déterminer des états opérationnels du luminaire (120-k) ; pour
dériver une valeur de capteur à décalage compensé via l'application du modèle d'étalonnage sur la valeur de capteur qui est mesurée par ledit capteur en fonction de l'état opérationnel du luminaire (120-k) lors de la mesure de ladite valeur de capteur ; et pour
appliquer la valeur de capteur à décalage compensé en lieu et place de la valeur de capteur qui est mesurée par ledit capteur.

11. Procédé (200) pour faire fonctionner un luminaire (120-k) pour éclairer un espace, dans lequel le luminaire (120-k) comprend au moins une source de lumière (121-k) pour produire une sortie de lumière pour ledit espace et un capteur pour mesurer une caractéristique environnementale au niveau d'une localisation du luminaire (120-k), le procédé (200) comprenant :
la collecte (204), pendant une période d'apprentissage, de données d'apprentissage qui décrivent une relation entre des valeurs de capteur qui sont mesurées par ledit capteur et des états opérationnels correspondants du luminaire (120-k), et
la dérivation (206), après la période d'apprentissage sur la base desdites données d'apprentissage, d'un modèle d'étalonnage pour compenser un décalage survenant dans les valeurs de capteur qui sont mesurées par ledit capteur du fait de l'état opérationnel du luminaire (120-k),
**caractérisé en ce que** ledit capteur est un capteur de température pour mesurer une température ambiante au niveau de la localisation du luminaire (120-k),
dans lequel la dérivation (206) dudit modèle d'étalonnage comprend la dérivation d'au moins une courbe de décalage de température qui modélise une variation de la température qui est mesurée par ledit capteur en fonction de l'état opérationnel du luminaire (120-k), et
dans lequel ledit décalage définit une déviation par rapport à la température ambiante au niveau de la localisation du luminaire (120-k) du fait de la chaleur dont l'origine est le fonctionnement de l'au moins une source de lumière (121-k).

12. Programme informatique comprenant un code de programme lisible par ordinateur (325) configuré pour forcer un appareil informatique (300) à réaliser au moins le procédé (200) selon la revendication 11 lorsque ledit code de programme (325) est exécuté sur l'appareil informatique (300).
